Europäisches Patentamt

European Patent Office

Office européen des brevets

(19)

(11) **EP 1 578 624 B1**

(12) **EUROPÄISCHE PATENTSCHRIFT**

(45) Veröffentlichungstag und Bekanntmachung des Hinweises auf die Patenterteilung:
**22.11.2006 Patentblatt 2006/47**

(21) Anmeldenummer: **03813880.6**

(22) Anmeldetag: **28.11.2003**

(51) Int Cl.:
**B60C 23/04** *(2006.01)* **B60C 23/06** *(2006.01)*

(86) Internationale Anmeldenummer:
**PCT/EP2003/013451**

(87) Internationale Veröffentlichungsnummer:
**WO 2004/058517 (15.07.2004 Gazette 2004/29)**

(54) **VERFAHREN ZUR AUTOMATISCHEN BESTIMMUNG DER EINBAUPOSITIONEN VON RÄDERN IN EINEM KRAFTFAHRZEUG**

METHOD FOR AUTOMATICALLY DETERMINING THE FITTING POSITION OF TIRES IN A MOTOR VEHICLE

PROCEDE DE DETERMINATION AUTOMATIQUE DE LA POSITION DE MONTAGE DES ROUES DANS UN VEHICULE AUTOMOBILE

(84) Benannte Vertragsstaaten:
**DE FR IT**

(30) Priorität: **20.12.2002 DE 10259944**

(43) Veröffentlichungstag der Anmeldung:
**28.09.2005 Patentblatt 2005/39**

(73) Patentinhaber: **Continental Teves AG & Co. oHG 60488 Frankfurt (DE)**

(72) Erfinder:
• **LAUER, Peter**
  **61118 Bad Vilbel (DE)**

• **STÖLZL, Stefan**
  **69469 Weinheim (DE)**
• **GRIESSER, Martin**
  **65760 Eschborn (DE)**
• **KÖBE, Andreas**
  **64625 Bensheim (DE)**
• **EDLING, Frank**
  **65929 Frankfurt (DE)**
• **SÄGER, Peter**
  **61381 Friedrichrichsdorf (DE)**
• **KOUKES, Vladimir**
  **64297 Darmstadt (DE)**

(56) Entgegenhaltungen:
**DE-A- 10 105 641      DE-A- 19 618 658**

**Beschreibung**

Die Erfindung betrifft ein Verfahren gemäß Oberbegriff von Anspruch 1, beispielsweise gemäß Dokument DE 101 05 641 A1.

Aus der DE 42 05 911 A1 ist eine Überwachungsvorrichtung für den Luftdruck von luftbereiften Fahrzeugrädern bekannt. Allerdings ist die dort vorgestellte Realisierung sehr aufwendig. Eine darin genannte Ausführungsform weist pro Sender im Rad einen zugehörigen Empfänger am Fahrzeug auf, eine andere Ausführungsform basiert auf einer kombinierten Sende-/Empfangseinheit im Rad und einem oder mehreren Empfangseinheiten am Fahrzeug. Die Zuordnung der einzelnen Räder zu den Einbauorten erfolgt über einen sogenannten Paarungsprozess, der entweder manuell oder automatisch vorgenommen wird. Bei dem manuellen Paarungsprozess erfolgt die Zuordnung der Räder zu ihren Einbauorten durch einen Bediener, daher ist der manuelle Paarungsprozess sehr zeit- und arbeitsintensiv und kann bei einer fehlerhaften Bedienung zu einer falschen Zuordnung der einzelnen Räder zu den Einbauorten führen. Bei dem automatischen Paarungsprozess ist eine fehlerfreie Zuordnung der einzelnen Räder zu den Einbauorten möglich, allerdings ist der notwendige technische Aufwand sehr hoch und teuer, da zusätzliche Hardware, z. B. mehrere Empfangsantennen, erforderlich ist.

Aus der DE 197 21 480 A1 ist ein Verfahren zur Erkennung von Druckverlusten im Fahrzeugreifen bekannt. Da das Verfahren auf Signalen basiert, die aus Raddrehzahlen mehrerer Fahrzeugräder gewonnen werden, kann eine Zuordnung des Rades mit einem Luftdruckverlust zu der jeweils tatsächlich vorliegenden Montageposition erfolgen. Jedoch ist das Verfahren nicht geeignet, einen absoluten Druckwert der einzelnen Räder zu ermitteln.

Die Aufgabe der vorliegenden Erfindung besteht nun darin ein kostengünstiges Verfahren bereitzustellen, welches Informationen über absolute Luftdruckwerte sowie der Montagepositionen liefert.

Diese Aufgabe wird durch das Verfahren gemäß Anspruch 1 gelöst.

Die Korrelationsbeiwerte werden vorzugsweise aus ersten Zuordnungsfunktionen und zweiten Zuordnungsfunktionen unter Zuhilfenahme einer Korrelationsfunktion ermittelt.

Die ersten Zuordnungsfunktionen werden bevorzugt aus den TPMS-Informationen gebildet, welche alle möglichen Zuordnungen der Identifikationsnummern zu den Einbaupositionen beschreiben, wobei jeder möglichen Zuordnung ein individueller Kennwert zugeordnet wird. Weiterhin werden nach der hier beschriebenen bevorzugten Ausführungsform aus den DDS-Informationen die zweiten Zuordnungsfunktionen gebildet, welche jeder möglichen Einbauposition eines Rades jeweils einen weiteren individuellen Kennwert zuweisen. Vorzugsweise bestehen die ersten Zuordnungsfunktionen aus 24 Funktionen $F\_dmR\_j\_i$ (j beschreibt einen ganzzahligen Index der Werte zwischen 1 und 24 annehmen kann; i beschreibt einen Laufindex), welche bei einem vierrädrigen Fahrzeug alle möglichen Zuordnungen der Identifikationsnummern zu den Einbaupositionen beschreiben. Weiterhin bevorzugt bestehen die zweiten Zuordnungsfunktionen bei einem vierrädrigen Fahrzeug aus 4 Funktionen $F\_imR\_i$ (i beschreibt einen weiteren Laufindex), welche die möglichen Einbaupositionen (vorne links, vorne rechts, hinten links, hinten rechts) eines Rades beschreiben.

In einer weiteren bevorzugten Ausführungsform des Verfahrens beinhalten die Korrelationsfunktion eine Mittelwertbildung über die Zeit.

Vorzugsweise wird die Korrelationsfunktion aus einem Quotienten erhalten, aus einem Dividend, der im wesentlichen aus einer Multiplikation der ersten Zuordnungsfunktionen mit den zweiten Zuordnungsfunktionen besteht, und einem Divisor, der im wesentlichen aus einer Multiplikation der quadrierten ersten Zuordnungsfunktionen mit den quadrierten zweiten Zuordnungsfunktionen besteht.

In einer weiteren bevorzugten Ausführungsform stellen die Korrelationsbeiwerte Zahlenwerte dar, welche Wahrscheinlichkeiten beschreiben, ob die gewählte Zuordnung der Identifikationsnummern zu den Einbaupositionen mit der tatsächlichen Zuordnung übereinstimmt, wobei durch die zeitliche Mittelwertbildung eine Normierung der Zahlenwerte auf einen Wertebereich, insbesondere auf den Bereich zwischen -1 und +1, erfolgt.

Vorteilhafterweise werden alle berechneten Korrelationsbeiwerte miteinander verglichen, wobei der Korrelationsbeiwert mit dem höchsten betragsmäßigen Zahlenwert die richtige Zuordnung der Räder zu den Einbaupositionen darstellt. Anschließend werden die Identifikationsnummern gemäß der ermittelten Zuordnung den-Einbaupositionen zugeordnet.

Weitere bevorzugte Ausführungsformen ergeben sich aus den Unteransprüchen und der nachfolgenden Beschreibung eines Ausführungsbeispiels.

Das Verfahren basiert auf einem direkt messenden Reifendrucküberwachungssystem (TPMS; Tire Pressure Monitoring System) mit 4 sendenden Raddruckmodulen und einer Empfangs- und Auswerteeinrichtung. Bei diesem System befindet sich in jedem Rad eine Reifendruckmesseinrichtung mit einer Sendeeinrichtung, welche TPMS-Informationen, die je Rad aus einer radindividuellen Identifikationsnummer sowie den zu diesem Rad gehörenden Luftdruck bestehen, an die Empfangs- und Auswerteeinrichtung-überträgt. Da das beschriebene direkt messende Reifendrucküberwachungssystem ohne einen weiter oben beschriebenen Paarungsprozess oder einen anderen Zuordnungsprozess nicht in der Lage ist, eine Zuordnung der Räder zu ihren Einbaupositionen allein aus den Identifikationsnummern zu realisieren, werden weitere Informationen benötigt, welche eine Zuordnung der Räder zu ihren Einbaupositionen ermöglicht. Diese zusätzlichen Informationen, im weiteren DDS-Informationen genannt, werden aus einem indirekt messenden Reifendrucküberwachungssystem (DDS; Deflation Detection System), welches aus dem Drehverhalten der einzelnen Räder Luftdruckänderungen ermittelt, und daher zur Bestimmung der Einbauposition eines Rades, welches einen Druckverlust aufweist, geeignet ist. Das direkt messende Reifendrucküberwachungssystem sendet die TPMS-Informationen an die Empfangs- und Auswerteeinrichtung. Das indirekt messende Reifendrucküberwachungssystem erzeugt bevorzugt Referenzwerte, die einen Reifendruckverlust anzeigen. Während der Fahrt ändern sich die TPMS-Informationen, z. B. durch Temperatureinflüsse, mehr oder weniger ständig. Auch die DDS-Informationen werden während der Fahrt durch zahlreiche Störeffekte beeinflusst, z. B. durch sich ändernde Radabrollumfänge wegen Radlastvariationen, Reibwertänderungen, Beladungsvariationen etc. Das Verfahren der Erfindung basiert auf der Tatsache, dass im Regelfall die Reifendruckänderungen der TPMS-Informationen mit den Änderungen der DDS-Informationen korrelieren.

Nach dem erfindungsgemäßen Verfahren werden zwei Zuordnungsfunktionen F_imR (imR steht für indirekt messendes Reifendrucküberwachungssystem) und F_dmR (dmR steht für direkt messendes Reifendrucküberwachungssystem) gebildet, welche mit Hilfe eines Korrelationsverfahren und eines Auswerteverfahrens eine Zuordnung der Räder zu den Einbaupositionen ermöglichen.

Die Funktion F_imR_i (i steht für einen Laufindex) weist einem Rad einen Wert zu. Dabei ist

F_imR_i = 1, falls das Rad VR schneller ist,
F_imR_i = 2, falls das Rad VL schneller ist,
F_imR_i = 3, falls das Rad HL schneller ist und
F_imR_i = 4, falls das Rad HR schneller ist.

Hierbei bedeutet VR vorne rechts, VL vorne links, HL hinten links, und HR hinten rechts.

Da das direkt messende Reifendrucküberwachungssystem lediglich eine Information über den absoluten Reifenluftdruck und die zugehörige Identifikationsnummer ID_x (x steht für einen ganzzahligen Index von 1 bis 4) übermittelt, müssen alle möglichen Kombinationen zwischen den Einbaupositionen (VR, VL, HR, HL) und den Identifikationsnummern (ID_1, ID_2, ID_3, ID_4) getestet werden.

Es ergeben sich bei einem vierrädrigen Fahrzeug 24 unterschiedliche Kombinationen. Diese 24 Funktionen F_dmR_j_i (j beschreibt einen ganzzahligen Index der Werte zwischen 1 und 24 annehmen kann; i beschreibt einen Laufindex) werden im folgenden berechnet. Die erste Funktion F_dmR_1_i entspricht zum Beispiel der möglichen Zuordnung

$$\text{VR} = \text{ID\_1}, \text{VL} = \text{ID\_2}, \text{HL} = \text{ID\_3}, \text{HR} = \text{ID\_4}.$$

Daraus ergibt sich für die Funktion F_dmR_1_i die folgende Wertzuordnung

F_dmR_1_i = 1, falls das Rad mit ID_1 die größere Druckverringerung aufweist,
F_dmR_1_i = 2, falls das Rad mit ID_2 die größere Druckverringerung aufweist,
F_dmR_1_i = 3, falls das Rad mit ID_3 die größere Druckverringerung aufweist, und
F_dmR_1_i = 4, falls das Rad mit ID_4 die größere Druckverringerung aufweist.

Die zweite Funktion F_dmR_2_i entspricht zum Beispiel der möglichen Zuordnung VR = ID_2, VL = ID_3, HL = ID_4, HR = ID_1.

Daraus ergibt sich für die Funktion F_dmR_2_i die folgende Wertzuordnung

F_dmR_2_i = 1, falls das Rad mit ID_2 die größere Druckverringerung aufweist,
F_dmR_2_i = 2, falls das Rad mit ID_3 die größere Druckverringerung aufweist,
F_dmR_2_i = 3, falls das Rad mit ID_4 die größere Druckverringerung aufweist, und
F_dmR_2_i = 4, falls das Rad mit ID_1 die größere Druckverringerung aufweist.

Den Funktionen F_dmR_3_i bis F_dmR_24_i werden entsprechende Werte zugeordnet.

Die 24 Korrelationsbeiwerte Korr_j (j beschreibt einen ganzzahligen Index der Werte zwischen 1 und 24 annehmen kann) werden gemäß der Gleichung

$$Korr\_j = \frac{\sum\limits_{i=1}^{N}[(F\_imR\_i)\bullet(F\_dmR\_j\_i)] - \frac{1}{N}\bullet\sum\limits_{i=1}^{N}(F\_imR\_i)\bullet\sum\limits_{i=1}^{N}(F\_dmR\_j\_i)}{\left\{\left[\left(\sum\limits_{i=1}^{N}(F\_imR\_i)^2\right) - \frac{1}{N}\bullet\left(\sum\limits_{i=1}^{N}F\_imR\_i\right)^2\right]\bullet\left[\left(\sum\limits_{i=1}^{N}(F\_dmR\_j\_i)^2\right) - \frac{1}{N}\bullet\left(\sum\limits_{i=1}^{N}F\_dmR\_j\_i\right)^2\right]\right\}^{0,5}}$$

bestimmt. Dabei gibt N die Anzahl der Messungen an.

Die Korrelationsbeiwerte Korr_j bewegen sich hierbei im Bereich $-1 \le K\ddot{o}rr\_j \le +1$. Die Funktion F_dmR_j_i, die einen betragsmäßig deutlich größeren Korrelationsbeiwert Korr_j als alle anderen Korrelationsbeiwerte Korr_j aufweist, beschreibt mit einer hohen Wahrscheinlichkeit die richtige Zuordnung der Identifikationsnummern (ID_1, ID_2, ID_3, ID_4) zu ihren Einbaupositionen (VL, VR, HL, HR). Die Zuordnung der Funktion F_dmR_1_i mit VR = ID_1, VL = ID_2, HL = ID_3, HR = ID_4 beschreibt beispielsweise die korrekte Zuordnung. Das heißt, dass der Korrelationsbeiwert Korr_1 einen betragsmäßig deutlich größeren Wert aufweist, als die anderen berechneten Korrelationsbeiwerte.

## Patentansprüche

1. Verfahren zur automatischen Bestimmung der Einbaupositionen von Rädern in einem Kraftfahrzeug, wobei das Kraftfahrzeug ein direkt messendes Reifendrucküberwachungssystem, welches radindividuelle Reifendruckmesseinrichtungen und Sendeeinrichtungen zur Übertragung von TPMS-Informationen, die Reifenluftdruckwerte und Identifikationsnummern der einzelnen Räder enthalten, zu einer im oder am Fahrzeug installierten Empfangs- und Auswerteeinrichtung beinhaltet, sowie ein indirekt messendes Reifendrucküberwachungssystem, welches DDS-Informationen, die Luftdruckänderungen und Einbaupositionen enthalten, aus dem Drehverhalten der einzelnen Räder ermittelt, aufweist, **dadurch gekennzeichnet, dass** aus den TPMS-Informationen und den DDS-Informationen Korrelationsbeiwerte mittels einer Korrelationsfunktion ermittelt werden.

2. Verfahren nach Anspruch 1, **dadurch gekennzeichnet, dass** die Korrelationsbeiwerte aus ersten Zuordnungsfunktionen und zweiten Zuordnungsfunktionen unter Zuhilfenahme der Korrelationsfunktion ermittelt werden.

3. Verfahren nach Anspruch 1 oder 2, **dadurch gekennzeichnet, dass** aus den TPMS-Informationen die ersten Zuordnungsfunktionen gebildet werden, welche alle möglichen Zuordnungen der Identifikationsnummern zu den Einbaupositionen beschreiben, wobei jeder möglichen Zuordnung ein individueller Kennwert zugeordnet wird, und dass aus den DDS-Informationen die zweiten Zuordnungsfunktionen gebildet werden, welche jeder möglichen Einbauposition eines Rades jeweils einen weiteren individuellen Kennwert zuweisen.

4. Verfahren nach mindestens einem der Ansprüche 1 bis 3, **dadurch gekennzeichnet, dass** die Korrelationsfunktion eine Mittelwertbildung über die Zeit beinhaltet.

5. Verfahren nach mindestens einem der Ansprüche 1 bis 4, **dadurch gekennzeichnet, dass** die Korrelationsfunktion aus einem Quotienten erhalten wird, aus einem Dividend, der im wesentlichen aus einer Multiplikation der ersten Zuordnungsfunktionen mit den zweiten Zuordnungsfunktionen besteht, und einem Divisor, der im wesentlichen aus einer Multiplikation der quadrierten ersten Zuordnungsfunktionen mit den quadrierten zweiten Zuordnungsfunktionen besteht.

6. Verfahren nach mindestens einem der Ansprüche 1 bis 5, **dadurch gekennzeichnet, dass** die Korrelationsbeiwerte Zahlenwerte darstellen, welche Wahrscheinlichkeiten beschreiben, ob die gewählte Zuordnung der Identifikationsnummern zu den Einbaupositionen mit der tatsächlichen Zuordnung übereinstimmt, wobei durch die zeitliche Mittelwertbildung eine Normierung der Zahlenwerte auf einen Wertebereich, insbesondere auf den Bereich zwischen -1 und +1, erfolgt.

7. Verfahren nach Anspruch 6, **dadurch gekennzeichnet, dass** alle berechneten Korrelationsbeiwerte miteinander verglichen werden, wobei der Korrelationsbeiwert mit dem höchsten betragsmäßigen Zahlenwert die richtige Zuordnung der Räder zu den Einbaupositionen darstellt, und dass die Identifikationsnummern gemäß der ermittelten Zuordnung den Einbaupositionen zugeordnet werden.

## Claims

1. A method for the automatic determination of the installation positions of wheels in a motor vehicle, with the motor vehicle including a directly measuring tire pressure monitoring system comprising wheel-individual tire pressure measuring devices and transmitting devices for the transfer of TPMS data containing tire air pressure values and identification numbers of the individual wheels to a receiving and evaluating device installed in or on the vehicle, as well as an indirectly measuring tire pressure monitoring system determining DDS data from the rotational behavior of the individual wheels, said data containing air pressure changes and installation positions, **characterized in that** correlation coefficients are determined from the TPMS data and the DDS data by means of a correlation function.

2. The method as claimed in claim 1, **characterized in that** the correlation coefficients are determined from first allocation functions and second allocation functions by using the correlation function.

3. The method as claimed in claim 1 or 2, **characterized in that** the first allocation functions describing all possible allocations of the identification numbers to the installation positions are produced from the TPMS data, and an individual characteristic value is allocated to each possible allocation, and **in that** the second allocation functions are produced from the DDS data and assign in each case another individual characteristic value to each possible installation position of a wheel.

4. The method as claimed in at least any one of claims 1 to 3, **characterized in that** the correlation function comprises an averaging operation as a function of time.

5. The method as claimed in at least any one of claims 1 to 4, **characterized in that** the correlation function is obtained from a quotient, from a dividend essentially composed of a multiplication of the first allocation functions with the second allocation functions, and a divisor essentially composed of a multiplication of the squared first allocation functions with the squared second allocation functions.

6. The method as claimed in at least any one of claims 1 to 5, **characterized in that** the correlation coefficients represent numerical values describing probabilities, whether the selected allocation of the identification numbers to the installation positions is coincident with the actual allocation, while the time averaging operation causes a standardization of the numerical values to a range of values, in particular to a range between -1 and +1.

7. The method as claimed in claim 6, **characterized in that** all calculated correlation coefficients are compared with each other, and the correlation coefficient with the maximum absolute numerical value irrespective of sign represents the correct allocation of the wheels to the installation positions, and **in that** the identification numbers are allocated to the installation positions according to the determined allocation.

## Revendications

1. Procédé de détermination automatique des positions de montage des roues d'un véhicule automobile, le véhicule automobile comportant un système de contrôle de la pression des pneus mesurant directement, lequel contient des dispositifs de mesure individuels aux roues de la pression des pneus et des dispositifs d'émission pour la transmission d'informations TPMS, qui contiennent des valeurs de la pression des pneus et des numéros d'identification des différentes roues, à un dispositif de réception et d'évaluation installé dans ou sur le véhicule, ainsi qu'un système de contrôle de la pression des pneus mesurant indirectement qui détermine des informations DDS, lesquelles contiennent des variations de la pression des pneus ainsi que des positions de montage, à partir du comportement en rotation des différentes roues, **caractérisé en ce qu'**à partir des informations TPMS et des informations DDS, des coefficients de corrélation sont déterminés au moyen d'une fonction de corrélation.

2. Procédé selon la revendication 1, **caractérisé en ce que** les coefficients de corrélation sont déterminés à partir de premières fonctions d'association et de secondes fonctions d'association avec l'aide de la fonction de corrélation.

3. Procédé selon la revendication 1 ou 2, **caractérisé en ce qu'**à partir des informations TPMS sont formées les premières fonctions d'association qui décrivent toutes les associations possibles des numéros d'identification aux positions de montage, à chaque association possible étant attribuée une valeur caractéristique individuelle, et **en ce qu'**à partir des informations DDS sont formées les secondes fonctions d'association qui attribuent à chaque position de montage possible d'une roue une autre valeur caractéristique individuelle.

4. Procédé selon l'une au moins des revendications 1 à 3, **caractérisé en ce que** la fonction de corrélation contient la formation d'une valeur moyenne dans le temps.

5. Procédé selon l'une au moins des revendications 1 à 4, **caractérisé en ce que** la fonction de corrélation est obtenue à partir d'un quotient, d'un dividende qui est constitué pour l'essentiel de la multiplication des premières fonctions d'association par les deuxièmes fonctions d'association, et d'un diviseur qui est constitué pour l'essentiel de la multiplication des premières fonctions d'association au carré par les secondes fonctions d'association au carré.

6. Procédé selon l'une au moins des revendications 1 à 5, **caractérisé en ce que** les coefficients de corrélation représentent des valeurs chiffrées qui décrivent des probabilités pour que l'association choisie des numéros d'identification aux positions de montage coïncide avec l'association effective, la formation de la valeur moyenne dans le temps donnant une normalisation des valeurs chiffrées sur une plage de valeurs, en particulier sur la plage comprise entre -1 et +1.

7. Procédé selon la revendication 6, **caractérisé en ce que** tous les coefficients de corrélation calculés sont comparés entre eux, le coefficient de corrélation présentant la valeur chiffrée absolue maximale représentant l'association correcte des roues aux positions de montage, et **en ce que** les numéros d'identification sont attribués aux positions de montage selon l'association déterminée.